# EUROPÄISCHE PATENTSCHRIFT

(11) **EP 1 060 355 B1**
(45) Veröffentlichungstag und Bekanntmachung des Hinweises auf die Patenterteilung: **25.06.2003**
(21) Anmeldenummer: 99906247.4
(22) Anmeldetag: 19.02.1999
(51) Int. Cl.: F27B 21/00, H05B 6/64, G21C 3/62

(54) **VERFAHREN UND VORRICHTUNG ZUM MIKROWELLENSINTERN VON KERNBRENNSTOFF**
METHOD AND DEVICE FOR MICROWAVE SINTERING OF NUCLEAR FUEL
PROCEDE ET DISPOSITIF POUR LE FRITTAGE HYPERFREQUENCE DE COMBUSTIBLE NUCLEAIRE

(30) Priorität: 19.02.1998 DE 19806868
(43) Veröffentlichungstag der Anmeldung: 20.12.2000
(73) Patentinhaber: Framatome ANP GmbH, 91050 Erlangen (DE)
(72) Erfinder: GRADEL, Gerhard, D-91301 Forchheim (DE); DÖRR, Wolfgang, D-91074 Herzogenaurach (DE); SCHMITT, Bruno, D-91077 Dormitz (DE); WILLERT-PORADA, Monika, D-95448 Bayreuth (DE); GERDES, Thorsten, D-44141 Dortmund (DE)
(74) Vertreter: Mörtel & Höfner
(86) Internationale Anmeldenummer: EP9901078
(87) Internationale Veröffentlichungsnummer: WO99042778

(56) Entgegenhaltungen:
- WO-A-91/03140
- WO-A-98/08227
- BE-A- 874 748
- US-A- 3 622 732
- US-A- 4 476 363

## Beschreibung

Die Erfindung betrifft ein Verfahren zum Sintern von Kernbrennstoff in einem Mikrowellenofen sowie einen entsprechenden Mikrowellenofen.

Der industrielle Einsatz von Mikrowellenöfen ist gegenwärtig auf das Trocknen von Körpern oder Materialien, das Sterilisieren (z.B. von Lebensmitteln), das Polymerisieren von Gummi, Aushärten von Kunststoffen und ähnliche Prozesse beschränkt, die bei mittleren Temperaturen ablaufen. Die Keramikindustrie ist am Einsatz von Mikrowellen zum Sintern interessiert, der jedoch bisher praktisch nur auf einen Labormaßstab beschränkt ist, da nach den bisherigen Erfahrungen zwar kürzere Sinterdauern ausreichen, jedoch angeblich höhere Temperaturen (also ein höherer Verschleiß der Öfen) nötig sind und insgesamt höhere Energieverluste auftreten, jedoch möglicherweise bessere Materialeigenschaften (z.B. ein feineres Korn in der keramischen Struktur) erreichbar wären. Jedoch wurden bisher überhaupt keine Produkte mit befriedigenden Qualitäten mit Mikrowellen erreicht.

In der nicht vorveröffentlichten Anmeldung PCT/EP 97/04513 ist aber ein Verfahren beschrieben, mit dem Grünlinge, die aus ungesintertem Kernbrennstoff gepreßt sind, zu fertigen Kernbrennstoff-Sinterkörpern gesintert werden, wobei sowohl die Form der Sinterkörper als auch deren Dichte und mechanisch/chemische Beschaffenheit den Anforderungen für den Einsatz in Kernreaktoren genügen. Dabei sind bei gleicher Dauer nur niedrigere Temperaturen nötig als bei konventionellen Verfahren, wodurch sich sowohl die Wartung vereinfacht als auch der Verschleiß und die Energieverluste verringern. Allerdings ist die dort beschriebene, auf empirische Weise ausgelegte Anordnung schwierig zu optimieren. Die angestrebte homogene Temperaturverteilung im Brennstoff, niedrige Temperaturverluste und geringe thermische Beanspruchung der Ofenteile sind schwer zu erreichen und nicht immer reproduzierbar.

Die besondere Eigenart des keramischen Kernbrennstoffs ist, daß er hinreichend gut an die Mikrowellen "ankoppelt", d.h. Energie aus dem Mikrowellenfeld aufnehmen kann, ohne bei niedrigen Temperaturen elektrisch leitend zu sein. Bei höheren Temperaturen nimmt jedoch die elektrische Leitfähigkeit zu und der Brennstoff verhält sich in steigendem Maße wie ein Metall. Es kommt daher zu lokalen Überhitzungen, Lichtbögen und Verzerrungen des Mikrowellenfeldes (z.B. kann ein bereits gut gesinterter, leitfähiger Bereich die Mikrowellen am Eindringen in benachbarte Bereiche des Brennstoffs hindern. Das Ergebnis sind unregelmäßig gesinterte, teilweise aufgeschmolzene und verformte Tabletten. Daher wird eine möglichst homogene Verteilung der Energie und Temperatur ohne scharf ausgeprägte lokale Maxima angestrebt.

Nach diesem älteren Vorschlag werden die Mikrowellen von einem Magnetron oder einem ähnlichen elektrischen Bauteil (z.B. einen Klystron) erzeugt und durch einen Wellenleiter in den Ofenraum (Arbeitsraum) geleitet, der als Resonator ausgebildet ist, d.h. allseitig von Mikrowellen-reflektierenden (metallischen) Wänden abgeschirmt ist. Dabei ist das Magnetron als einzige Quelle des Mikrowellenfeldes, der Kernbrennstoff nur als Senke des Feldes und die Wellenleiter mit dem Resonatorraum lediglich als verlustbehaftete Übertragung der Mikrowellen betrachtet, wobei die Geometrie des Resonatorraumes und der Wellenleiter empirisch so gewählt werden soll, daß die Wärmeverluste minimiert werden, also vom Kernbrennstoff möglichst viel Energie aus dem Feld entnommen wird. Zusätzlich wird durch eine Veränderung der Position der Wellenleiter am Arbeitsraum eine möglichst gleichmäßige Temperaturverteilung im Brennstoff eingestellt. Um die nötige Leistung aufzubringen, sind mehrere Magnetrons jeweils über einen Wellenleiter, der an seinem Ende mit seinem vollen Querschnitt in den Resonatorraum übergeht, vorgesehen und die einzelnen Magnetrons werden individuell gesteuert, um durch Überlagerung der von ihnen erzeugten Wellenfelder zu einer möglichst homogenen Temperaturverteilung zu kommen.

Eine gleichmäßige Qualität wird dabei nur dadurch erreicht, daß das Sintergut durch eine mit einem Sintergas durchströmte Keramik-Röhre geschoben wird, die sich quer durch den ganzen Resonatorraum erstreckt. Bei der unvermeidlichen lokalen Inhomogenität des Wellenfeldes und der Temperaturverteilung durchlaufen dann alle Bereiche des Brennstoffs die gleichen lokalen Verhältnisse, so daß zuletzt alle Proben des Brennstoffs hinsichtlich der erlittenen Temperaturen die gleiche Vorgeschichte haben sollten. Voraussetzung hierfür ist, daß das Mikrowellenfeld keine stärkeren zeitlichen Schwankungen erleidet. Hinsichtlich der für das Sintern vorgesehenen Temperaturen, Sinterzeiten, Sinteratmosphären sowie vorteilhafter Einrichtungen (z.B. Gasschleusen zum Einführen des Brennstoffs in die vom Sintergas durchströmten Rohre) und weiterer Einzelheiten einer Sinteranlage mit Mikrowellen enthält dieses Dokument eine Fülle von Vorschlägen, die auch für die vorliegenden Erfindung anwendbar sind. Der Inhalt dieses Dokuments gehört daher auch zum Inhalt der vorliegenden Anmeldung, mit der die Einstrahlung der Mikrowellen in den Arbeitsraum (Resonatorraum) verbessert wird.

Auch der vorliegenden Erfindung liegt die Aufgabe zugrunde, ein Verfahren und einen Mikrowellenofen zum Sintern von Kernbrennstoff anzugeben, der die für den Einsatz im Reaktor erforderliche Qualität besitzt. Dabei ist unter "Kernbrennstoff" nicht nur Uranoxid selbst, sondern auch Mischungen mit anderen Oxiden (insbesondere Transuranen wie Plutonium und Thorium) und auch Absorbermaterialien (wie Gadoliniumoxid) zu verstehen. Bevorzugt ist die Erfindung für das Sintern von gepreßten Formkörpern des Brennstoffs (sogenannte "Grünlinge") zu entsprechenden Sinterformkörpern (in der Regel zylindrische Tabletten, sogenannte "Pellets") bestimmt, sie ist jedoch auch geeignet, um Pulver oder Granulat bei entsprechenden Sintertemperaturen zu behandeln. Nach den Erfahrungen mit der vorliegenden Erfindung ist nämlich zumindest bei den für den Einsatz in einem Kernreaktor geeigneten Materialien durch Einsatz von Mikrowellen mit einer Erniedrigung der Sintertemperaturen und der Wärmeverluste zu rechnen.

Die Erfindung geht dabei davon aus, daß die steigende elektrische Leitfähigkeit des Kernbrennstoffs bei hohen Temperaturen nicht nur zu Verschlechterungen des Sinterergebnisses führt, sondern auch zu instabilen Verhältnissen im Feld. Denn der Brennstoff wird entsprechend seiner inhomogenen Aufheizung nicht nur zu einer inhomogenen Senke für die Mikrowellenstrahlung, sondern wirkt aufgrund der elektrischen Eigenschaften selbst ähnlich wie ein "Sender", so daß es zu instabilen Rückkopplungen auf die Magnetrons und die von ihnen abgegebene Strahlung kommt. Diese Rückkopplungen lassen sich mit einer Anordnung, die den Ofenraum (Resonatorraum) lediglich als einen Vermittler für die Strahlung zwischen Magnetron (Quelle) und Kernbrennstoff (Absorber) betrachtet, der hinsichtlich der Verluste zu optimieren ist, nicht zuverlässig beherrschen.

Die Erfindung benutzt vielmehr zunächst einen allseitig mittels Mikrowellen reflektierender (metallischer) Wände abgeschlossenen Antennenhohlraum, der in seinen Abmessungen auf die verwendete Mikrowellenstrahlung abgestimmt ist, um ein stabiles Mikrowellenfeld (stehende Welle) zu erzeugen. Üblicherweise wird in der Mikrowellentechnik ein Magnetron oder ein Klystron verwendet, um eine Frequenz von 915 MHz oder 2,45 GHz zu erzeugen; allgemein ist eine Frequenz zwischen 0,4 und 30 GHz geeignet. Die Abmessungen von verlustarmen, auf diese Frequenzen abgestimmten Wellenleitern sind untersucht, bekannt und beschrieben. Werden diese Wellenleiter an ihren Enden durch reflektierende Wände (sogenannte "Kurzschluß-Abschlüsse") abgeschlossen, so werden sie zu Resonatoren, in denen solche Frequenzen zu stehenden Wellenfeldern führen.

Vorzugsweise ist nach der Erfindung jedem derartigen Antennenhohlraum ein einzelnes Magnetron (oder Klystron) zugeordnet, das jedoch nicht innerhalb der stehenden Welle angeordnet ist, sondern sich am Ende eines entsprechenden Wellenleiters befindet, der mit seinem anderen Ende in den Antennenhohlraum einmündet.

Aus dem auf diese Weise stabilisierten Feld im Antennenhohlraum wird die zum Sintern benötigte Energie über mehrere enge Öffnungen in einer Wand des Antennenhohlraums ausgekoppelt und in den Resonatorraum abgestrahlt. Im Vergleich zur Fläche einer Wand des Antennenhohlraums sind diese Öffnungen, die vorzugsweise als Schlitze ausgebildet sind, so klein, daß sie die Ausbildung der stehenden Welle im Antennenhohlraum praktisch nicht beeinflussen, keine elektrische Überschläge hervorrufen, aber genügend Leistung abstrahlen. Dadurch wird auch die Rückkopplung von Mikrowellenstrahlung in den Antennenhohlraum minimiert.

Solche "Schlitzantennen" sind früher für die Nachrichtentechnik bereits vorgeschlagen worden, um entsprechende Felder in praktisch eine unendliche Umgebung abzustrahlen, aus der nur geringfügige Reflexionen zurückkommen. Dadurch soll ein stabilisierter, flächenhafter Strahler mit einer über die Strahlerfläche gleichmäßig verteilten Strahlungsleistung entstehen.

Die Technik einer solchen Schlitzantenne ist von Werner Rüggeberg beschrieben "A Multislotted Waveguide Antenne for High-Powered Microwave Heating Systems", IEEE Transactions on Industry Applications, Vol. IA-16, No. 6, November/December 1998, Seiten 809 bis 813. Dort sind Vorgehen und Formeln beschrieben, mit denen die abgestrahlte Leistung sowie Zahl und Anordnung der Schlitze bestimmt werden, um zu einer gewünschten flächenhaften Verteilung der Strahlungsleistung zu kommen. Dabei wird das bestrahlte Gut wie ein unendlicher Raum betrachtet, in denen eine erhebliche Energie abgestrahlt, aber die abgestrahlte Energie nicht reflektiert wird. Daher sind auch nur niedrige Temperaturen am Ort des Absorbers betrachtet. Bringt man jedoch einen metallischen Körper, der bezüglich Reflexion und Absorption den auf hohe Temperatur erwärmten Kernbrennstoff simulieren könnte, von außen in die Nähe der Schlitze, so bricht die stehende Welle im Antennenhohlraum, in dem nach Rüggeberg auch das Magnetron angeordnet ist, zusammen und es kommt zu Lichtbögen und erheblichen Schäden an den Wänden und dem Magnetron der Antenne und dem Reflektor. Beim Einbau einer solchen Schlitzantenne nach Rüggeberg in die Anordnung nach der PCT/EP 97/04513 traten diese Schäden sogar auf, obwohl die Antennenleistung gedrosselt war und die mittlere Temperatur im Kernbrennstoff noch keine Sintertemperatur erreichte.

Trotzdem sieht die Erfindung einen von einem Mikrowellenstrahler gespeisten Antennenhohlraum mit einer mindestens eine enge Öffnung (vorteilhaft: mehrere Schlitze) tragenden Wand zum Einkoppeln von Mikrowellen in einen den Kernbrennstoff enthaltenden Resonatorraum vor. Jedoch sind die Schlitze so ausgelegt, daß die Rückkopplung auf den Antennenhohlraum durch Reflexionen am Kernbrennstoff nicht mehr stören. Durch die veränderte Anordnung der Schlitze kann vielmehr die Temperaturverteilung im Kernbrennstoff beherrscht und eingestellt werden.

Vorteilhaft sind nach der Erfindung mehrere solche Schlitzantennen benutzt, um in den Resonatorraum die zum Sintern des Brennstoffs nötige Energie einzukoppeln. Vorteilhaft besitzt der Resonatorraum etwa die gleiche Länge wie der Antennenhohlraum und der Antennenhohlraum ist an einer Längsseite des Resonatorraums angeordnet. Im einfachsten Fall sitzt der Antennenhohlraum direkt am Resonatorraum, so daß beide Räume durch eine gemeinsame Wand getrennt sind, die die engen Öffnungen oder Schlitze trägt.

Berücksichtigt man das bereits erwähnte metallische Verhalten von hocherhitztem Brennstoff, so wird das Sintergut somit nicht nur zu einem starken Absorber, sondern auch zu einem "Sender" (oder wenigstens einem Reflektor), dessen Rückkopplung auf die stehende Welle im Antennenhohlraum nicht vernachlässigt werden darf. Vielmehr sind die Resonanzverhältnisse im Antennenhohlraum durch die Rückkopplung mit dem Kernbrennstoff stark verstimmt.

Will man diese Rückkopplung vermeiden, so könnten die Zahl und/oder Fläche der Schlitze verringert werden. Dadurch verringert sich die rückgekoppelte Energie, aber auch die vom Kernbrennstoff aufgenommene und für das Sintern benötigte Energie, so daß' der Brennstoff praktisch nicht auf die nötige Sintertemperatur erhitzt wird. Dieser Weg ist also nicht gangbar.

Vielmehr muß das System als rückgekoppeltes System betrachtet werden und der Antennenhohlraum mit den Schlitzen von vornherein auf die verstimmten Verhältnisse ausgelegt werden. Dies ist auf einfache Weise empirisch möglich, indem die Länge des Antennenhohlraums durch verschiebbare metallische Abschlüsse geändert und die Lage der Schlitze in den Wänden des Antennenhohlraums variiert wird. Es zeigt sich, daß durch derartige Veränderungen eine wesentlich homogenere Verteilung von Temperatur und Feld im Resonatorraum erreichbar und die erwähnten Schäden vermeidbar sind.

Das erfindungsgemäße Verfahren, ein Mikrowellenofen zum Sintern von Kernbrennstoff sowie einige vorteilhafte Weiterbildungen sind in den Ansprüchen angegeben.

Anhand von 9 Figuren und mehreren Ausführungsbeispielen wird die Erfindung näher erläutert. Es zeigen:
- FIG 1: ein erstes Ausführungsbeispiel eines erfindungsgemäßen Mikrowellenofens zur Durchführung des erfindungsgemäßen Verfahrens,
- FIG 2 und 3: Ausschnitte eines Antennenhohlraums mit veränderlichen Schlitzen zum Auskoppeln der Mikrowellen,
- FIG 4 und 5: zwei weitere Ausführungsbeispiele eines erfindungsgemäßen Mikrowellenofens,
- FIG 6: einen Querschnitt durch den Mikrowellenofen nach Figur 4,
- FIG 7 und 8: zwei Seitenansichten von erfindungsgemäßen Mikrowellenöfen,
- FIG 9: einen Temperaturverlauf, der im Ofen der Figur 7 aufgenommen wurde.

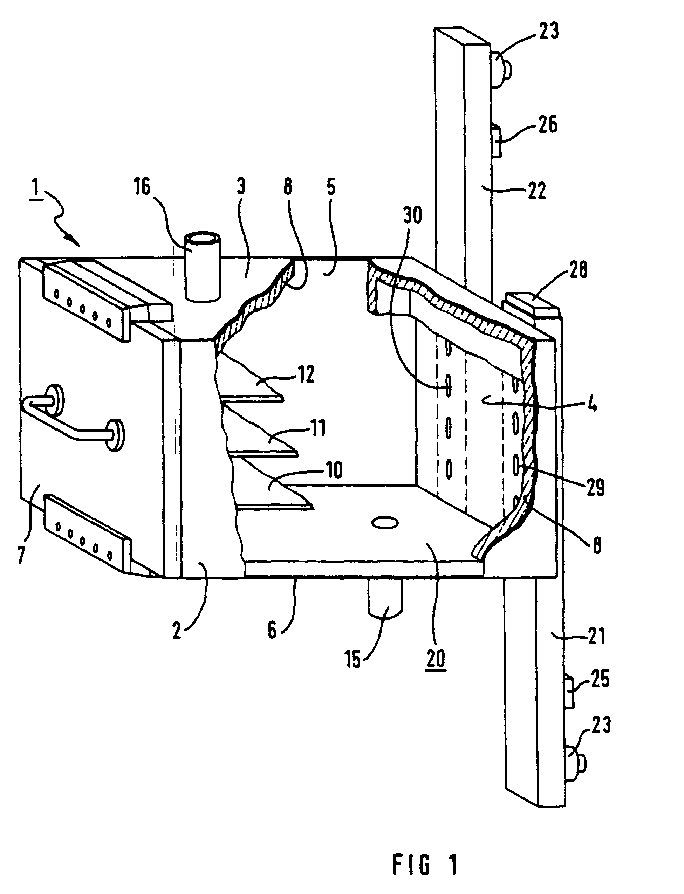

Beim Mikrowellenofen 1 der Figur 1 sind Teile einer Seitenwand 2 und der Deckwand 3 weggebrochen, um das Innere eines quaderförmigen Resonatorraumes 20 sichtbar zu machen. Der Resonatorraum ist an den Seiten durch die erwähnte Seitenwand 2, die dazu parallele Seitenwand 5, die Deckwand 3 und die entsprechende Bodenwand 6 und nach hinten durch die Rückwand 4 abgeschlossen. Die entsprechende Vorderwand 7 ist als eine fest verschraubbare Türe ausgebildet, wobei alle diese Wände aus Stahlblech mit 3 mm Wandstärke gebildet sind. Allgemein kommt jedes Material (insbesondere Metall) in Frage, sofern es die Mikrowellen reflektiert und mindestens bis Temperaturen bis 800 °C temperaturbeständig ist und sowohl im belüfteten Zustand des Resonatorraumes 20 als auch bei einer Füllung mit dem für das Sintern vorgesehene Sintergas chemisch beständig ist, insbesondere keinen Zunder bildet. Vorteilhaft sind die Innenwände poliert oder verspiegelt, um die Reflektion der Mikrowellen zu erleichtern.

Die Innenflächen sind mit einer Thermoisolation 8 ausgeschlagen, die für Mikrowellen weitgehend transparent ist. Hierfür kommt keramisches Material, insbesondere Aluminiumoxid in porösem Zustand, in Frage. In Figur 1 ist diese Thermoisolierung ebenfalls weitgehend weggebrochen, so daß (nur teilweise dargestellte) Halterungen 10, 11, 12 sichtbar werden, auf denen drei Lagen des Kernbrennstoffs eingeführt und gehalten werden können. Ferner ist eine Gaszuführung 15 und Gasabführung 16 erkennbar, um Sintergas (z.B. trockener Wasserstoff mit einem Sauerstoffpartialdruck von 10⁻⁸ Atmosphären oder darunter) in die Kammer einzuleiten bzw. abzusaugen.

Der mittels der Wände 2 bis 7 abgeschirmte Resonatorraum 20 wird an seiner Rückwand 4 mit Mikrowellen gespeist, die in entsprechenden Antennenhohlräumen 21 und 22 erzeugt werden. Auch diese Antennenhohlräume 21, 22 sind nach allen Seiten durch ähnliche Wände abgeschirmt, wobei jeweils ein Magnetron 23 in das abgeschlossene Ende der Antennenhohlräume ragt. Ferner ist ein Gehäuse 25 für Einrichtungen erkennbar, die in der Mikrowellentechnik üblich sind, um die vom Magnetron ausgehenden Wellen und die reflektierten Wellen zu messen und durch eine Blende (z.B. eine handelsübliche Anordnung aus drei im Antennenhohlraum veränderlich angeordneten Reflektorstäben) die reflektierten Wellen zu dämpfen.

Ferner ist erkennbar, daß das andere Ende des Antennenhohlraums 21 durch einen Kurzschluß-Schieber 28 abgeschlossen ist, der mit einer veränderlichen Länge in den Antennenhohlraum ragt, um diesen Hohlraum zur Justierung zu verändern.

Wesentlich ist, daß die Trennwand zwischen den Antennenhohlräumen 21 und 22 und dem Resonatorraum 20 jeweils enge Öffnungen 30 trägt, die nur einen geringen Bruchteil der gemeinsamen Fläche zwischen den Antennenhohlräumen und dem Resonatorraum einnehmen.

Bei geöffneter Türe können eine oder mehrere Lagen aus Granulat oder Pulver des Kernbrennstoffs in den Ofen eingebracht werden, der anschließend verschlossen und mit dem für die vorgesehene Behandlung erforderlichen Gas beschickt wird. Dieser Ofen ist in erster Linie für Verfahren mit geringerer Leistung bestimmt, z.B. zum Trocknen von Pulvern oder zur Laboruntersuchung an geringen Mengen. Insbesondere zum Sintern großer Mengen bei hohen Temperaturen, vor allem zum Sintern von formgepreßten Grünlingen, erscheint es vorteilhafter, in Abweichung von der Figur 1 das Magnetron sowie die erwähnte Instrumentierung mit Meßgeräten und Blenden nicht in dem Antennenhohlraum selbst anzuordnen, wo sie durch eine dort gebildete stehende Welle gefährdet sind, sondern in Wellenleitern. Auch die Dimensionierung des quaderförmigen Resonatorraumes (50 cm breit, 30 cm hoch, 60 cm lang) ist nicht optimiert. Als besonders wesentlich ist jedoch erkennbar, daß die Einkopplung der Mikrowellen nicht durch einen Wellenleiter geschieht, der an seiner Öffnung zum Resonatorraum praktisch kein Hindernis für die Mikrowellen darstellt und praktisch keine Reflexion erzeugt, sondern daß der langgestreckte Resonatorraum an seinen beiden Stirnseiten abgeschlossen ist und zum Auskoppeln der Mikrowellen seitliche Schlitze 29 trägt, die vorzugsweise in Längsrichtung orientiert sind.

Vorzugsweise beträgt der zur Eintrittsrichtung der Mikrowellen in den Resonatorraum senkrechte Querschnitt Kantenlängen, die mindestens ein Viertel und höchstens das 4fache der Wellenlänge der erzeugten Mikrowellen in Luft betragen, wobei auch ein zylindrischer Resonatorraum möglich (aber schwieriger zu optimieren) ist, sofern er einen etwa flächengleichen Querschnitt wie ein durch diese Grenzwerte bestimmter quaderförmiger Resonatorraum besitzt.

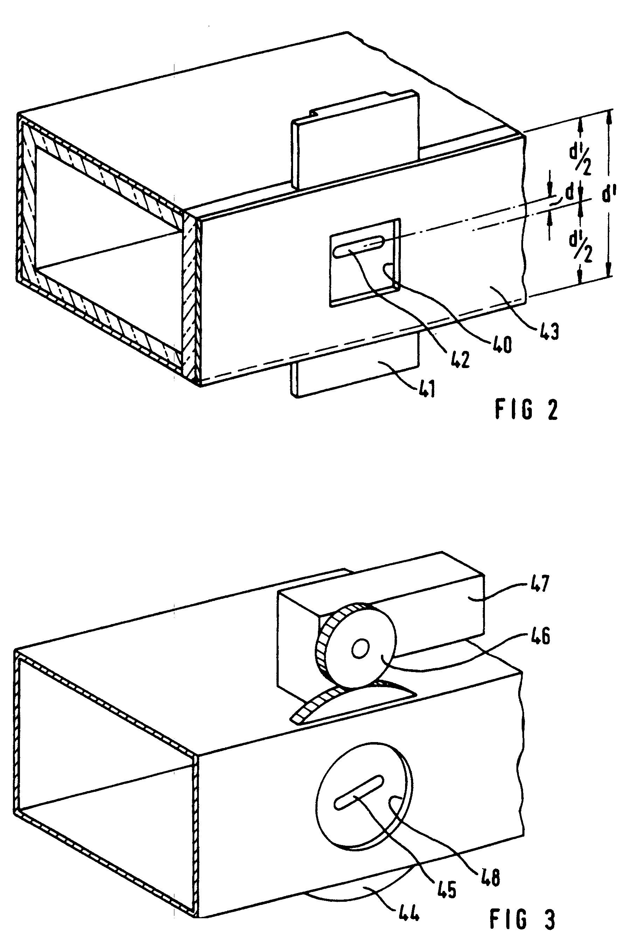

In der Längsrichtung des Antennenhohlraums kann der Abstand der Schlitze auf die Frequenz des Magnetrons (2,45 GHz) bzw. die entsprechende stehende Welle abgestimmt und fest vorgegeben sein, jedoch bestimmt jeweils der Abstand von der Mitte des Antennenhohlraums die durch den Schlitz abgestrahlte Leistung und kann (z.B. empirisch) justiert werden. In Figur 2 ist ein Abschnitt eines quaderförmigen Antennenhohlraums dargestellt, der vom Resonatorraum durch eine Trennwand 43 getrennt ist, die aus mehreren Blechen zusammengesetzt ist und eine Breite d' besitzt. In die Trennwand ist ein Fenster 40 eingearbeitet, das durch einen in der Wand gehaltenen Schieber 41 weitgehend abgedeckt ist. In diesen Schieber 41 ist ein Längsschlitz 42 eingearbeitet, dessen Abstand d von der Mittellinie der erwähnten Wand somit veränderlich ist.

Eine Abnahme der durch den Schlitz abstrahlenden Energie kann auch gemäß Figur 3 erreicht werden, wobei in der Wand eine drehbare Scheibe 44 mit einem entsprechenden Schlitz 45 gezeigt ist, dessen Orientierung somit innerhalb des entsprechenden Fensters 48 verändert werden kann. Dabei ist die abgestrahlte Energie praktisch proportional zu der Projektion des Schlitzes auf die Längsrichtung, d.h. bei einer Orientierung in Längsrichtung wird die maximale Energie abgegeben. Die Schlitze können bereits bei der Konstruktion des Ofens durch entsprechende empirische Versuche unter Betriebsbedingungen festgelegt und dann in die Ofenkonstruktion übernommen werden, es kann sich jedoch erforderlich erweisen, daß auf Veränderungen des Temperaturprofils beim Betrieb des Ofens durch eine entsprechende Veränderung der Schlitze reagiert werden soll. Zu diesem Zweck ist in Figur 3 ein Treibrad 46 für die Scheibe 44 gezeigt, das von einem Servomotor 47 angetrieben wird, um die Lage des Schlitzes betriebsabhängig zu verändern.

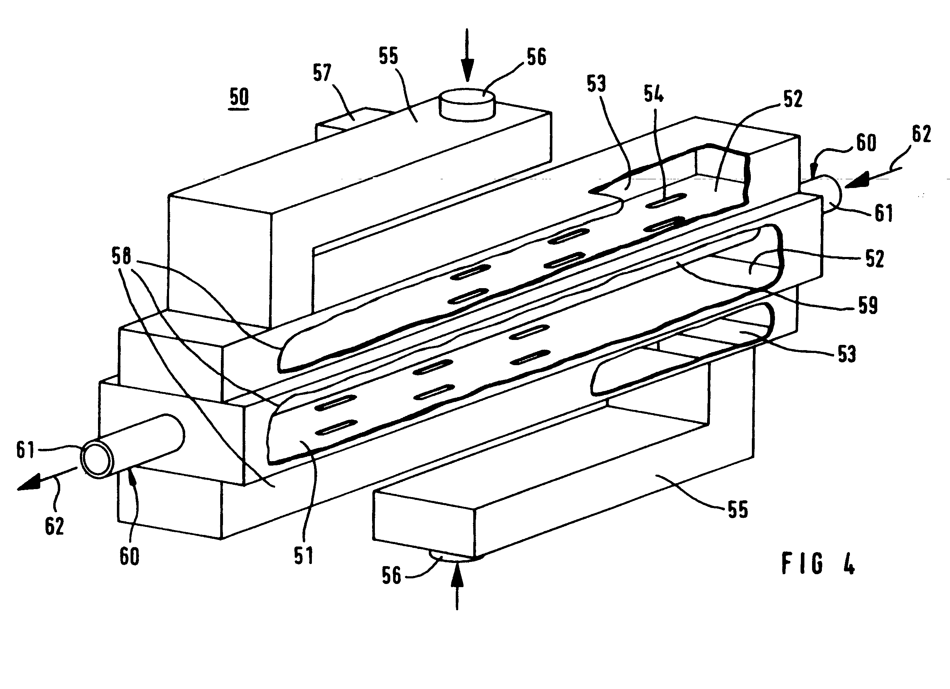

In Figur 4 ist schematisch ein Ofen dargestellt, der insbesondere für das Sintern von formgepreßten Grünlingen aus Kernbrennstoff zu den für den Reaktoreinsatz geeigneten Brennstoffsinterkörpern ausgelegt ist.

Zentralteil dieses Ofens 50 ist der langgestreckte, quaderförmige Resonatorraum 51, wobei an zwei gegenüberliegenden Seiten des Resonatorraumes jeweils ein durch eine gemeinsame Wand (Trennwand) getrennter Antennenhohlraum 53 anliegt. In die gemeinsame Wand 52 sind jeweils eine Mehrzahl von Längsschlitzen 54 eingearbeitet, wobei deren Anordnung hier zunächst willkürlich dargestellt ist. Diese Antennenhohlräume 53 sind ebenfalls quaderförmig, haben aber einen etwas kleineren Querschnitt, der mit dem Querschnitt von Wellenleitern 55 übereinstimmt, die gewinkelt sind und in die Resonatorräume einmünden. Durch die Pfeile sind die elektrischen Anschlüsse sowie die Ausrichtung von jeweils einem Magnetron 56 bezeichnet, das jeweils in das abgeschlossene Ende des Wellenleiters 55 hineinragt. Zwischen dem Magnetron 56 und der Einmündung des Wellenleiters in den Antennenhohlraum ist ein Sockel 57 für Meßinstrumente, die die auslaufende und zurückkommende Mikrowelle getrennt erfassen, und für eine Blende erkennbar, wie sie im Stand der Technik in solchen Wellenleitern verwendet werden.

Durch die Position 58 ist angedeutet, daß die Hohlräume mit einer (zeichnerisch nicht dargestellten) Wärmeisolierung ausgekleidet oder weitgehend ausgefüllt sein können, die weitgehend transparent für die verwendeten Mikrowellen ist. Eine solche, innerhalb des von reflektierenden Wänden umschlossenen Raums angeordnete Isolierung ist jedenfalls für den Resonanzraum (zumindest dessen ungeschlitzte Wände) vorteilhaft, da dadurch das Wandmaterial vor der Wärmestrahlung des erhitzten Kernbrennstoffs geschützt wird. Für die Antennenhohlräume ist eine derartige Wärmestrahlung nicht zu befürchten und es kann bereits ausreichen, die Innenwände zu polieren, zu verspiegeln oder auf andere Weise eine hohe Reflektion und eine geringe Absorption zu erzeugen; da die üblichen Materialien für Thermoisolierungen, z.B. Aluminiumoxid, selbst mit steigender Temperatur beginnen, Mikrowellen zu absorbieren, kann es vorteilhaft sein, in den Antennenhohlräumen Materialien zu verwenden, die eine niedrigere Absorption für die Mikrowellen aufweisen als Aluminiumoxid, oder auf eine Wärmeisolierung zu verzichten.

Ferner zeigt Figur 4 ein Keramikrohr 59, das sich durch die ganze Länge des Resonanzraums erstreckt. Dieses Keramikrohr dient einerseits zur Aufnahme des Sinterguts (d.h. der Grünlinge), das durch das Rohr geschoben wird. Andererseits wird durch das Keramikrohr 59 auch das Sintergas geleitet, vorzugsweise im Gegenstrom zur Bewegungsrichtung des Sinterguts.

In Figur 4 ist nicht dargestellt, daß das Keramikrohr 59 außerhalb des Resonanzraums jeweils in eine Gasschleuse übergeht, die einerseits das Beladen und Entladen des Resonanzraums mit dem Sintergut und dem Sintergas ermöglicht. Derartige Gasschleusen sind in der erwähnten PCT/EP 97/04513 beschrieben. Die Position dieser (aus Gründen der Übersichtlichkeit weggelassenen) Gasschleusen ist durch die Pfeile 60 angedeutet. Dabei ist es vorteilhaft, wenn das Sintergut vor dem Betreten und nach dem Verlassen des Resonanzraumes eine an die Stirnwände des Resonanzraums angeformtes Metallrohr 61 passieren, das als Verlängerung oder konzentrische Hülle des Keramikrohrs 59 ausgebildet sein kann. Ein derartiges Metallrohr führt dazu, daß das Mikrowellenfeld innerhalb des Rohres, also an der Zufuhr und Abfuhr des Sinterguts, abgebaut wird, ohne nach außen zu dringen. Andererseits kann eine derartige, an die Stirnwände des Resonatorraumes anschließende, strahlungslose Zone vorteilhaft als Aufwärm- bzw. Abkühl-Strecke für den Kernbrennstoff dienen. Wird also der Kernbrennstoff von der links vorne erkennbaren Vorderwand in den Ofen eingeführt, durch das Keramikrohr 59 gefördert und am hinteren Ende entnommen, so kann ein durch die Pfeile 62 angedeuteter Gegenstrom, der zunächst niedrige Temperatur hat, den am hinteren Ende austretenden, heißen und gesinterten Brennstoff kühlen, um dann innerhalb des Ofens durch den Kontakt mit dem heißen Brennstoff selbst aufgeheizt zu werden und am Vorderende den eingespeisten, kühlen Brennstoff aufzuwärmen.

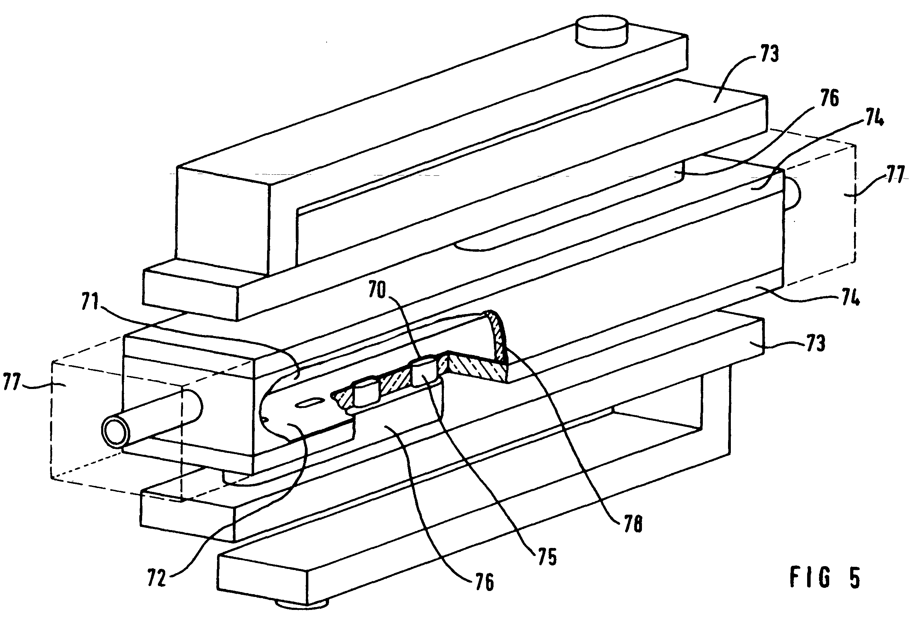

In Figur 5 ist praktisch der gleiche Ofen der Figur 4 gezeigt. Abweichend ist - neben der Anordnung der Schlitze, auf die noch eingegangen wird - lediglich, daß hier die aus den Schlitzen 70 austretenden Mikrowellen direkt auf das Keramikrohr 71 zur Förderung des Sinterguts gerichtet sind, ohne ein dazwischen liegendes weiteres Isolationsmaterial. Vielmehr ist jeweils die Wärmeisolation der Trennwand zwischen dem Resonanzraum 72 und einen der beiden Antennenhohlräumen 73 durch Isolierschichten 74 realisiert, die hier außerhalb der metallischen Wände des Resonanzraums 72 angeordnet sind. Als Trennwand wird hier also eine Anordnung aus zueinander parallelen, in geringen Abstand angeordneten Einzelwänden benutzt. Den Zutritt der aus den Antennenhohlräumen 73 abgestrahlten Mikrowellen zu den Schlitzen 70 an den Seiten des Resonatorraumes schaffen entsprechende rohrförmige Verbindungsstutzen 75, die ihrerseits von einer Packung 76 aus Isoliermaterial umgeben sein können.

Im Inneren des Resonatorraums 72 befinden sich jedoch an den ungeschlitzten Längswänden Verkleidungen aus Isoliermaterial 78, die eine Aufheizung der Seitenwände verhindern und somit auch dem Schutz des Personals vor Berührungen mit überhitzten Teilen dienen. Ferner ist angedeutet, daß die Gasschleusen jeweils in einem Gehäuse 77 an der Front und Rückwand außerhalb des Resonatorraumes angebracht sind. Vorzugsweise sind die metallischen Wände des Resonatorraums an dieser Frontseite und Rückseite nicht isoliert, vielmehr ist diese Isolierung erst an dem Gehäuse 77 dieser Gasschleusen angebracht, so daß diese Gehäuse 77 eine praktisch nicht von Mikrowellen beaufschlagte Aufheizzone und Abkühlungszone bilden.

Diese Isolierung nach Figur 5 ist vorzugsweise nur vorgesehen, falls im oberen Bereich der vorgesehenen Sintertemperaturen (etwa bei 1800 bis 1850 °C) gearbeitet werden soll und sich herausstellen sollte, daß handelsübliche, hochporöse Keramikkörper aus Aluminiumoxid zu stark an die direkt aus den Schlitzen austretende Strahlung ankoppeln und entsprechenden thermischen Belastungen über längere Zeit nicht standhalten.

Alternativ kann auch versucht werden, an diesen Stellen keinen hochporösen Festkörper, sondern z.B. entsprechendes Fasermaterial zu verwenden.

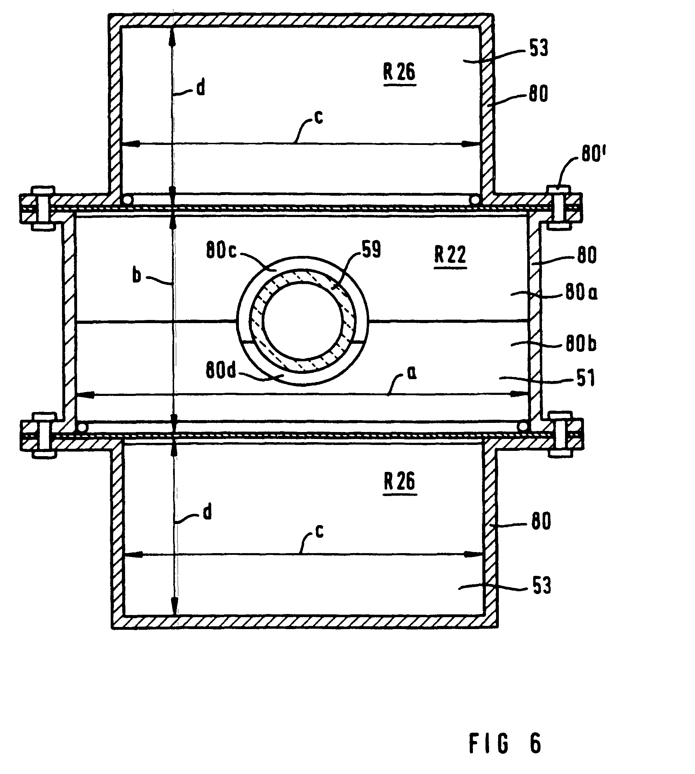

Einen Querschnitt durch die metallischen Wände des Resonanzraums 51 und der Antennenhohlräume 53 des Ofens nach Figur 4 zeigt Figur 6. Der Querschnitt des Resonanzraumes ist dabei durch die Maße gegeben, die in der Mikrowellentechnik für entsprechende Wellenleiter bekannt und mit "R22" bezeichnet sind, während der Querschnitt der Antennenhohlräume 53 einem Wellenleiter-Querschnitt mit der Bezeichnung "R26" entspricht. Für die Maße des Resonanzraums wurde a = 108 mm, b = 54 mm gewählt, und für die Antennenhohlräume c = 86 mm und d = 43 mm.

Die aus Stahl-Winkelteilen mit 3 mm Stärke zusammengeschweißten Wände 80 sind über Schraubbolzen 80' fest zusammengespannt, die auch Bleche aus Inconel mit 1 mm Stärke halten, in denen die erwähnten Schlitze in der Trennwand zwischen den Antennenhohlräumen und dem Resonanzraum eingearbeitet sind.

Ferner zeigt Figur 6, daß der Querschnitt des Antennenhohlraums 51 durch zwei aufeinandergelegte, hochporöse Keramikblöcke 80a, 80b aus Aluminiumoxid (Al₂O₃) praktisch ausgefüllt ist, die lediglich in ihrer Mitte eine Aussparung 80c für das bereits erwähnte Keramikrohr 59 tragen. In diese Aussparung 80c können an einigen Positionen Auflagen 80d zur Abstützung des Rohres 59 ragen.

Der Querschnitt der Antennenhohlräume entspricht auch dem Querschnitt des Wellenleiters, der jeweils an einem Ende in einen Antennenhohlraum einmündet und am anderen Ende den diesem Hohlraum zugeordneten Mikrowellenstrahler trägt. Die Leistung dieser Strahler in Figur 4 beträgt jeweils 1,25 kW. Mit dieser Leistung wurden Pellets bei etwa 1200 °C in CO₂-Atmosphäre bzw. 1300 °C bei H₂-Atmosphäre gesintert, wobei die Pellets etwa 140 W beim Sintern aufnahmen, 80 bis 150 W vom Sintergas aufgenommen und abtransportiert und 200 W zum Strahler zurückreflektiert wurden.

Für ein schnelleres Sintern bei höheren Temperaturen und entsprechend höherer Leistung (jeweils 2 kW) wurde die Höhe b des Resonanzraums zu b = 100 mm gewählt, die übrigen Maße aber beibehalten. Die Länge der Antennenhohlräume und des Arbeitsraums und die Länge der Mikrowellen zwischen dem Magnetron und dem Eintritt in den entsprechenden Antennenhohlraum betrug jeweils etwa 1,1 m.

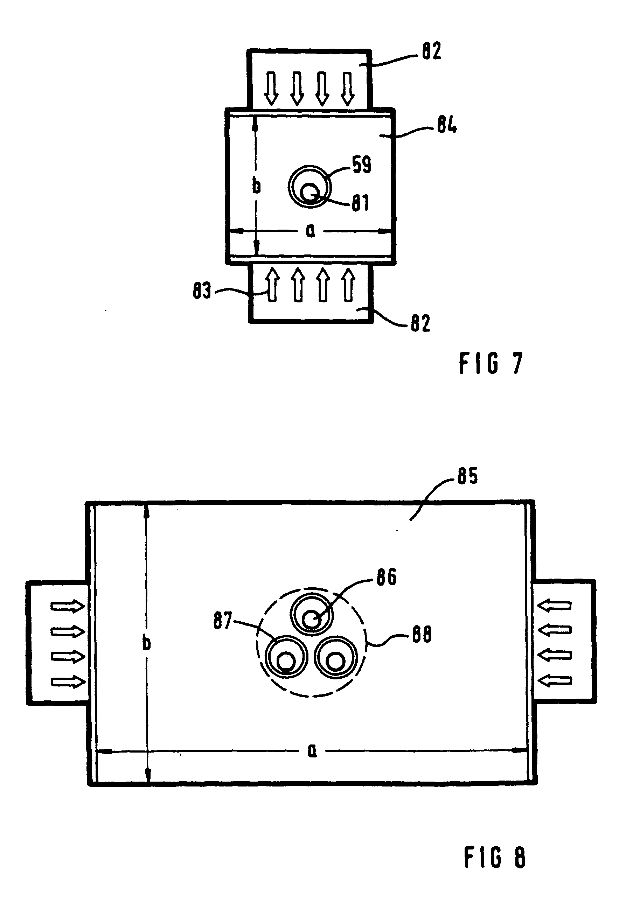

Bei dieser Länge kann das Keramikrohr 59 (Figur 7) einstückig gefertigt werden. Es genügt dann, wenn die Grünlinge 81 über eine in der PCT/EP 97/04513 gezeigte Einrichtung nacheinander in das Keramikrohr geschoben und im gesinterten Zustand dann am anderen Ende aufgesammelt werden.

Durch die Einspeisung mittels zwei jeweils in einen Antennenhohlraum 82 einspeisenden Magnetrons, von denen in Figur 7 nur die durch die Schlitze austretende Mikrowellenstrahlung 83 angedeutet ist, von jeweils 2 kW steht im Resonatorraum 84 genügend Leistung zur Verfügung, um mehrere Lagen des Kernbrennstoffs zu sintern, ohne daß sich durch diese Vervielfachung des Durchsatzes die Wärmeverluste wesentlich erhöhen.

Dabei sollte darauf geachtet werden, daß der Kernbrennstoff annähernd zentrisch um die Mittelachse des Resonatorraums über dessen Querschnitt verteilt ist. Eine entsprechende Halterung ist in Figur 8 gezeigt, wobei im Resonatorraum 85 drei Pelletsäulen 86 jeweils in einem eigenen Rohr 87 geführt sind.

Die hier beschriebenen Mikrowellenöfen sind nicht auf die Anwendung von formgepreßten Grünlingen beschränkt, die von der Frontseite in ein Rohr eingeschoben und auf der Rückseite entnommen werden. Es ist auch möglich, den Kernbrennstoff z.B. in Form von Schiffchen oder anderen Trägern in den Ofen einzuführen, z.B. nur von der Frontseite, von der sie dann auch wieder entnommen werden können. Auch in solchen Fällen ist es jedoch vorteilhaft, nicht den gesamten Resonatorraum mit Sintergas zu beladen und damit die Resonatorwände einer aggressiven Atmosphäre auszusetzen, sondern das Gas in einem entsprechenden, gasdichten Keramikrohr zu führen, z.B. dem in Figur 8 angedeuteten Rohr 88, das die Halterung für mehrere getrennte Lagen des Brennstoffs umschließt.

Für den senkrecht auf den geschlitzten Wänden stehenden Querschnitt des Resonatorraums in Figur 8 sind die Maße a = 30 cm, b = 20 cm gewählt. Dabei können vorteilhaft z.B. auch sechs Brennstoff-Halterungen vorgesehen sein, deren Anordnung dann z.B. den um den Mittelpunkt des Querschnitts angeordneten Ecken eines regulären Sechsecks entsprechen kann. Zusätzlich kann auch in der Mittelachse selbst eine Brennstoff-Halterung vorgesehen sein, so daß sieben Lagen von Kernbrennstoff gleichzeitig gesintert werden können.

Wird die Fördergeschwindigkeit des Brennstoffs im Rohr erhöht, um den Durchsatz zu steigern, so kann es erforderlich werden, die Ofenlänge zu erhöhen. In diesem Fall werden zwei nach den dargelegten Überlegungen aufgebaute Resonatorräume hintereinander angeordnet, so daß ein aus zwei Teil-Resonatorräumen zusammengesetzter Resonatorraum mit einer durchgehenden Halterung für den Brennstoff entsteht. Die beiden Teilräume sind im einfachen Fall durch eine Blende miteinander verbunden, um die Mikrowellenfelder beider Teilräume zu entkoppeln. Es erscheint aber auch möglich, ohne eine Blende, die die Teilräume gegeneinander abschirmt, zu arbeiten. Dabei kann mit einem einzigen, entsprechend langen Keramikrohr als Brennstoff-Halterung gearbeitet werden, es können aber auch aneinander anstoßende Rohre verwendet werden, die in Verbindungs-Muffen stecken.

Für die Auskopplung der Mikrowellen aus der im Antennenhohlraum gebildeten stehenden Welle ist es vorteilhaft, wenn der kleinste Abstand zwischen dem Mittelpunkt einer Öffnung und dem Rand der Öffnung nicht größer als etwa 4 % der Wellenlänge beträgt. Für die hier verwendete Frequenz von 2,45 GHz wurde eine Schlitzbreite von etwa 5 mm (jedenfalls unter 10 mm) gewählt. In der anderen Richtung kann die Öffnung ausgedehnter sein (bis etwa zur halben Wellenlänge). Unter diesen Bedingungen wurden an den Schlitzen noch keine Überschläge zwischen den metallischen Schlitzrändern beobachtet. Der Abstand zwischen den Mittelpunkten dieser Öffnungen sollte mindestens eine halbe Wellenlänge betragen. Daher wird der von den Öffnungen in der Trennwand des Antennenhohlraums eingenommene Flächenanteil auf weniger als 5 % begrenzt. Für die langgestreckten Antennenhohlräume sind die Schlitze in Longitudinalrichtung nicht auf der Mittellinie einer Antennenhohlraum-Seitenwand angeordnet, sondern zur Mittellinie versetzt, wobei die Schlitze z.B. alternierend nach beiden Seiten versetzt angeordnet werden können. Dabei hat es sich als vorteilhaft erwiesen, wenn die Schlitze in Longitudinalrichtung nicht gleichmäßig verteilt sind, sondern die Einspeisung der von dem Mikrowellenstrahler abgegebenen Mikrowellen in der Nähe des einen Endes des Antennenhohlraums angeordnet ist und die Schlitze vom anderen Ende her über die Länge (vorteilhaft etwa die Hälfte bis drei viertel der Länge) erstrecken. Der Abstand der einzelnen Schlitze d von der Mittellinie wurde nach der in Figur 2 beschriebenen Weise im Hinblick auf eine möglichst gleichmäßige Temperaturverteilung in dem Brennstoff optimiert, wobei von einem gleichmäßigen Abstand d von etwa 15 mm ausgegangen wurde.

Es sei angemerkt, daß in den Figuren 2 bis 9 gezeigte Einzelheiten einzelner Ausführungsbeispiele auch auf andere Ausführungsbeispiele übertragen werden können.

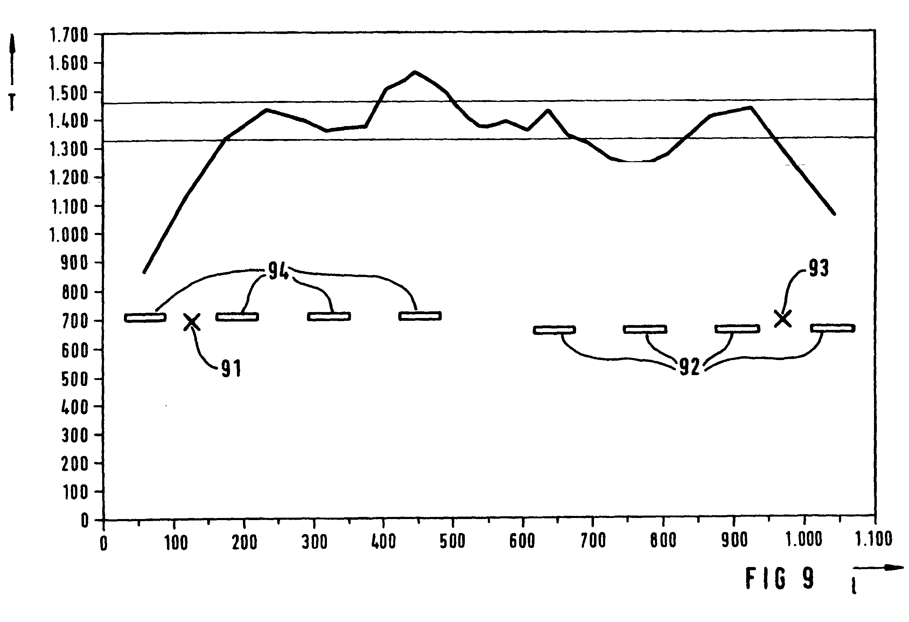

In Figur 9 ist die dabei erhaltene Temperaturverteilung und die Anordnung der Schlitze dargestellt. Dabei ist mit 91 etwa der Ort dargestellt, an dem der eine Wellenleiter in seinen zugeordneten Antennenhohlraum mündet, während mit 92 die Form und die longitudinale Position der Schlitze in der Wand zwischen diesem zugeordneten Antennenhohlraum und dem Resonatorraum dargestellt ist. Entsprechend ist die Einmündung des anderen Wellenleiters in den anderen Antennenhohlraum mit 93 und Lage und Form der Schlitze in der Wand zwischen dem anderen Antennenhohlraum und dem Resonatorraum mit 94 dargestellt, wobei der Ofen nach Figur 7 benutzt wurde. Die zum einen Antennenhohlraum gehörende Schlitze 93 liegen dabei alle auf der einen Seite, die zum anderen Antennenhohlraum liegen dabei alle auf einer Seite in der hinteren Hälfte des Resonatorraums, während die zum anderen Antennenhohlraum gehörenden Schlitze 94 diametral entgegengesetzt hierzu angeordnet sind.

Der Kernbrennstoff bestand aus üblichen Uranoxid-Pellets, die mit einer Geschwindigkeit von 4,4 mm/min. durch den Ofen, dessen Gesamtlänge 1,1 m betrug, geschoben wurden. Die dargestellte Temperaturverteilung war nach einer relativ kurzen Aufwärmzeit zeitlich praktisch konstant. Die Sinterdichte der Pellets war weitgehend homogen und lag im brauchbaren Bereich von 10,2 bis 10,6 g/cm³. Die hier verwendete Temperatur ist deutlich niedriger als die bei konventionellen Öfen für einen Sinterkörper der gleichen Dichte benötigte Temperatur. Denn beim Mikrowellensintern erwärmt sich der Brennstoff nur in geringem Maße durch die Berührung mit heißen Gasen oder oberflächliche Absorption von Wärmestrahlung in einer von der Oberfläche des Brennstoffs nach innen fortschreitenden Weise, sondern durch Absorption der Mikrowellenstrahlen im gesamten Volumen. Daher verkürzen sich die Sinterdauern und/oder es kann mit wesentlich niedrigeren Temperaturen gearbeitet werden. Wenn also behauptet wird, beim Mikrowellensintern von Keramik würden höhere Temperaturen benötigt, so dürfte dies auf fehlerhafte Meßmethoden zurückzuführen sein (der Meßfühler wird selbst durch die Mikrowellen erwärmt), und hohe Energieverluste deuten auf eine unzureichende Technologie.

Dadurch ist somit eine Möglichkeit gegeben, ohne einen übermäßigen experimentellen Aufwand ein Verfahren und einen Ofen festzulegen, um Kernbrennstoff bei hohen Temperaturen mit Mikrowellen in einem industriellen Ausmaß thermisch zu behandeln.

## Patentansprüche

1. Verfahren zum Behandeln von Kernbrennstoff in einem Mikrowellenofen (1),
**dadurch gekennzeichnet, dass** mittels eines Mikrowellenstrahlers in einem Antennenhohlraum (53) eine stehende Welle aufrechterhalten und der Kernbrennstoff in einen Resonatorraum (51) eingebracht wird, der über eine Mehrzahl enger Verbindungsöffnungen (54) aus dem Antennenhohlraum (53) mit Mikrowellen gespeist wird.

2. Verfahren nach Anspruch 1,
**dadurch gekennzeichnet, dass** der die stehende Welle aufrechterhaltende Mikrowellenstrahler über einen Wellenleiter in den Antennenhohlraum einspeist.

3. Verfahren nach Anspruch 1 oder 2,
**dadurch gekennzeichnet, daß** über die einzelnen Öffnungen (54) unterschiedliche, auf ein definiertes Temperaturprofil im Kernbrennstoff abgestimmte Leistungen in den Resonatorraum (51) eingestrahlt werden.

4. Verfahren nach einem der Ansprüche 1 bis 3,
**dadurch gekennzeichnet, daß** der Kernbrennstoff in einem mit Sintergas (62) gefüllten Rohr (59) gehalten und durch die Mikrowellen auf Temperaturen zwischen 20 und 2200 °C, vorzugsweise eine mittlere Temperatur zwischen 1400 und 1800 °C erwärmt wird.

5. Verfahren nach einem der Ansprüche 1 bis 4,
**dadurch gekennzeichnet, daß** der Kernbrennstoff auf einer Seite des Ofens (1) eingeführt, während des Sinterns durch den Ofen gefördert und auf der anderen Seite entnommen wird.

6. Verfahren nach Anspruch 5,
**dadurch gekennzeichnet, daß** ein Sintergas (62) entgegen der Förderrichtung des Kernbrennstoffs, vorzugsweise in einem den Kernbrennstoff umgebenden Rohr (59) aus Keramik, durch den Resonatorraum (51) geleitet wird.

7. Verfahren nach einem der Ansprüche 1 bis 6,
**dadurch gekennzeichnet, daß** ein langgestreckter, vorzugsweise quaderförmiger Resonatorraum (51) (51) verwendet wird und die engen Öffnungen (54) in Längsrichtung gegeneinander versetzt sind.

8. Verfahren nach einem der Ansprüche 1 bis 7,
**dadurch gekennzeichnet, daß** als enge Öffnungen Schlitze (54) verwendet werden.

9. Verfahren nach einem der Ansprüche 1 bis 8,
**dadurch gekennzeichnet, daß** die engen Verbindungsöffnungen (42, 54) in Teilen (41) einer Wand (43) des Resonatorraumes (51) bzw. Antennenhohlraums (52) eingearbeitet sind, die an anderen Teilen der Wand (43) beweglich gehalten sind, und daß durch Verändern der Position der Verbindungsöffnungen ein definiertes Temperaturprofil im Kernbrennstoff eingestellt wird.

10. Verfahren nach einem der Ansprüche 1 bis 9,
**dadurch gekennzeichnet, daß** ein langgestreckter Antennenhohlraum (53) mit einem der Frequenz des Mikrowellenstrahlers (56) angepaßten Querschnitt und ein parallel dazu angeordneter, etwa gleich langer Resonatorraum (51) mit einem größeren Querschnitt verwendet wird.

11. Verfahren nach einem der Ansprüche 1 bis 10,
**dadurch gekennzeichnet, daß** im Resonatorraum (51) mehrere Lagen (86) mit dem Kernbrennstoff angeordnet werden.

12. Verfahren nach Anspruch 11,
**dadurch gekennzeichnet, daß** der Kernbrennstoff (86) praktisch in einer symmetrischen Anordnung um die Mittelachse des Resonatorraumes (51) herum über den Querschnitt des Resonatorraumes (51) verteilt wird.

13. Verfahren nach einem der Ansprüche 1 bis 12,
**dadurch gekennzeichnet, daß** von einem zweiten Mikrowellenstrahler (56) Mikrowellen in einen zweiten Antennenhohlraum (53) eingespeist werden, der über eine Mehrzahl enger Verbindungsöffnungen ebenfalls Mikrowellen in den Resonatorraum (51) einstrahlt.

14. Verfahren nach Anspruch 13,
**dadurch gekennzeichnet, daß** höchstens vier Antennenhohlräume Mikrowellen in den Resonatorraum (51) einspeisen.

15. Verfahren nach einem der Ansprüche 1 bis 14,
**dadurch gekennzeichnet, daß** die Mikrowellen mit einer Frequenz zwischen 0,4 und 30 GHz, vorzugsweise etwa 915 MHz oder 2,45 GHz erzeugt werden.

16. Verfahren nach einem der Ansprüche 1 bis 15,
**dadurch gekennzeichnet, daß** der Kernbrennstoff jeweils durch ein metallisches Rohr (61) hindurch in den Resonatorraum (51) eingeführt und aus dem Resonatorraum (51) ausgeführt wird.

17. Verfahren nach einem der Ansprüche 1 bis 16,
**dadurch gekennzeichnet, daß** der Kernbrennstoff durch eine mit heißem Sintergas gefüllte, praktisch mikrowellenfreie Kammer (77) in den Resonatorraum (51) eingeführt und durch eine praktisch mikrowellenfreie, von kaltem Sintergas gefüllte Kammer (77) aus dem Resonatorraum (51) herausgeführt wird.

18. Verfahren nach einem der Ansprüche 1 bis 17,
**dadurch gekennzeichnet, daß** der Kernbrennstoff durch eine innerhalb des Resonatorraums (51) angeordnete Isolation (80a, 80b) geführt wird, die gegen Abstrahlung von Wärme isoliert.

19. Mikrowellenofen mit einem langgestreckten Resonatorraum (51), einem an einer Längsseite des Resonatorraumes (51) außen entlang laufenden, langgestreckten Hohlkanal und einem Wellenleiter (55), der an einem Ende in den Hohlkanal einmündet und am entgegengesetzten Ende geschlossen ist und dort einen Mikrowellenstrahler (56) enthält, wobei der Hohlkanal vom Resonatorraum durch eine Trennwand (52) getrennt und durch eine Mehrzahl in Längsrichtung des Resonatorraumes gegeneinander versetzter Schlitze (54) in dieser Trennwand mit dem Resonatorraum (51) verbunden ist, und wobei ferner der Resonatorraum (51) bis auf einen Zugang zum Einbringen und Entnehmen von Werkgut allseitig von Mikrowellen reflektierenden Wänden abgeschirmt ist, **dadurch gekennzeichnet, dass** zum Herstellen von Kernbrennstoff-Sinterkörpern durch Sintern von formgepreßten Grünlingen aus Kernbrennstoff in einem Sintergas bei mittleren Temperaturen zwischen 1200 und 1800°C
- ein Be- und Entgasungssystem (62) des Resonatorraumes und im Resonatorraum (51) eine langgestreckte Halterung (59) für die Grünlinge als Werkgut vorgesehen ist und
- der langgestreckte Hohlkanal mit der die Schlitze tragenden Trennwand an einer Stirnfläche geschlossen ist und einen Antennenhohlraum (53) bildet, der bis auf die Mündung des Wellenleiters (55) und die Schlitze (54) in der Trennwand (52) allseitig von Mikrowellen reflektierenden Wänden abgeschirmt und auf die Bildung einer stehenden Welle abgestimmt ist.

20. Ofen nach Anspruch 19,
**dadurch gekennzeichnet, daß** mindestens 95 % einer von der Trennwand (4) gebildeten Seite des Antennenhohlraums (21) und höchstens 5 % von der Verbindung zum Resonatorraum (20) gebildet sind.

21. Ofen nach Anspruch 19,
**dadurch gekennzeichnet, daß** der Wellenleiter (55) zumindest am offenen Ende ein geradliniges Kanalstück mit einem rechteckigen, auf die Frequenz des Mikrowellenstrahlers abgestimmten Querschnitt bildet.

22. Ofen nach einem der Ansprüche 19 und 21,
**dadurch gekennzeichnet, daß** im Wellenleiter (55) zwischen dem Mikrowellenstrahler (56) und der Einmündung in den Antennenhohlraum (53) eine Blende (57) angeordnet ist.

23. Ofen nach einem der Ansprüche 19 bis 22,
**dadurch gekennzeichnet, daß** die Frequenz des Mikrowellenstrahlers (56) 0,4 bis 30 GHz, vorzugsweise 915 MHz oder 2,45 GHz beträgt.

24. Ofen nach einem der Ansprüche 19 bis 23,
**dadurch gekennzeichnet, daß** der Mikrowellenstrahler (56) ein Magnetron oder Klystron ist.

25. Ofen nach einem der Ansprüche 19 bis 24,
**dadurch gekennzeichnet, daß** die Leistung des Mikrowellenstrahlers (56) zwischen 1 und 4 kW beträgt.

26. Ofen nach einem der Ansprüche 19 bis 25,
**dadurch gekennzeichnet, daß** der Antennenhohlraum (53) quaderförmig ist.

27. Ofen nach Anspruch 26,
**dadurch gekennzeichnet, daß** die Länge des Antennenhohlraums (21) durch einen Abschlußschieber (28) mit einer Mikrowellen-reflektierenden Oberfläche veränderlich ist.

28. Ofen nach einem der Ansprüche 19 bis 27,
**dadurch gekennzeichnet, daß** der Resonatorraum (51) über Schlitze (54) mit wenigstens einem weiteren Antennenhohlraum (53) verbunden ist, in den ein einen weiteren Mikrowellenstrahler (56) tragender weiterer Wellenleiter (55) einmündet.

29. Ofen nach einem der Ansprüche 19 bis 28,
**dadurch gekennzeichnet, daß** der Resonatorraum aus zwei hintereinander angeordneten Teilräumen besteht, mit denen jeweils mindestens ein von einem Mikrowellenstrahlen gespeister Antennenhohlraum über eine Mehrzahl von Schlitzen verbunden ist, und daß die Halterung für den Brennstoff sich durch beide Teilräume erstreckt.

30. Ofen nach einem der Ansprüche 19 bis 29,
**dadurch gekennzeichnet, daß** der Wellenleiter (55) und der Antennenhohlraum (53) den gleichen Querschnitt besitzen.

31. Ofen nach einem der Ansprüche 19 bis 30,
**dadurch gekennzeichnet, daß** der Resonatorraum (51) einen quaderförmigen Querschnitt aufweist, der - insbesondere an seiner von der Trennwand (52) gebildeten Seite - größer ist als der Querschnitt des Antennenhohlraums (53).

32. Ofen nach einem der Ansprüche 19 bis 31,
**dadurch gekennzeichnet, daß** die Seiten des Resonatorraum (51)-Querschnitts mindestens ein Viertel und höchstens das 4fache der Wellenlänge der Mikrowellenstrahlung in Luft betragen.

33. Ofen nach einem der Ansprüche 19 bis 32,
**dadurch gekennzeichnet, daß** im Resonatorraum (51) eine Mikrowelle-transparente Wärmeisolierung (80a, 80b) zwischen dem Kernbrennstoff und den Wänden angebracht ist.

34. Ofen nach einem der Ansprüche 19 bis 33,
**dadurch gekennzeichnet, daß** die Wände des Resonatorraums und/oder Antennenhohlraums verspiegelt oder poliert sind.

35. Ofen nach einem der Ansprüche 19 bis 34,
**dadurch gekennzeichnet, daß** im Resonatorraum (85) mehrere Halterungen (87) für jeweils eine Lage (86) aus dem Kernbrennstoff angeordnet sind.

36. Ofen nach Anspruch 35,
**dadurch gekennzeichnet, daß** der Kernbrennstoff (86) in den Lagen etwa symmetrisch um die Längsachse des Resonatorraumes (85) angeordnet ist.

37. Ofen nach einem der Ansprüche 19 bis 36,
**dadurch gekennzeichnet, daß** die Halterung ein ungefähr in der Mitte des Resonatorraumes (85) angeordnetes, den Brennstoff umgebendes und sich durch den ganzen Resonatorraum (51) erstreckendes Rohr (88, 59) aus Keramik umfaßt.

38. Ofen nach Anspruch 37,
**dadurch gekennzeichnet, daß** das Beund Entgasungssystem (62) in das Innere des Rohres (59) mündet.

39. Ofen nach einem der Ansprüche 19 bis 38,
**dadurch gekennzeichnet, daß** das Beund Entgasungssystem mindestens eine Gasschleuse (77) umfaßt, die gleichzeitig den Zugang zum Resonatorraum (51) bildet.

40. Ofen nach einem der Ansprüche 19 bis 39,
**dadurch gekennzeichnet, daß** der Zugang zum Einbringen und Entnehmen ein metallisches Rohr (60, 61) umfaßt, das außerhalb des Resonatorraums (51) angeordnet ist und durch das der Brennstoff gefördert wird.

41. Ofen nach einem der Ansprüche 19 bis 40,
**dadurch gekennzeichnet, daß** wenigstens ein Schlitz (42, 45) in der Wand beweglich ist, vorzugsweise durch Drehen einer in der Wand beweglich gelagerten Scheibe (44) oder Verschieben eines in der Wand beweglich gelagerten Schiebers (41).

42. Ofen nach einem der Ansprüche 19 bis 41,
**dadurch gekennzeichnet, daß** die Schlitze (92, 94) in Längsrichtung des Resonatorraums (51) gegeneinander versetzt sind.

43. Ofen nach Anspruch 42,
**dadurch gekennzeichnet, daß** die Schlitze (92) in einer Trennwand eines Antennenhohlraums alle auf einer Seite, bezogen auf die Längsrichtung der Trennwand, angeordnet sind.

44. Ofen nach einem der Ansprüche 19 bis 43,
**dadurch gekennzeichnet, daß** höchstens 5 % der von der Trennwand gebildeten Seite des Antennenhohlraums (53) von den Schlitzen gebildet wird.

45. Ofen nach einem der Ansprüche 19 bis 44,
**dadurch gekennzeichnet, daß** die Breite des Schlitzes höchstens 8 % der Wellenlänge der Mikrowellen in Luft beträgt.

46. Ofen nach einem der Ansprüche 19 bis 45,
**dadurch gekennzeichnet, daß** an einander gegenüberliegenden Wänden des Resonatorraumes (51) zwei Antennenhohlräume über Schlitze mit dem Resonatorraum (51) verbunden und durch je eine Trennwand getrennt sind und daß die Schlitze in einander nicht gegenüberliegenden Bereichen der beiden Trennwände angeordnet sind.

47. Ofen nach einem der Ansprüche 19 bis 46, **gekennzeichnet durch** Wände aus Stahl oder einem anderen Material, das bis 800 °C hitzebeständig und chemisch beständig ist.

## Claims

1. Method for treating nuclear fuel in a microwave furnace (1), **characterized in that** a stationary wave is maintained in an antenna cavity (53) by means of a microwave radiator and the nuclear fuel is introduced into a resonance chamber (51), which is fed with microwaves from an antenna cavity (53) via a plurality of narrow connecting openings (54).

2. Method according to Claim 1, **characterized in that** the microwave radiator which maintains the stationary wave feeds into the antenna cavity via a waveguide.

3. Method according to Claim 1 or 2, **characterized in that** different outputs, matched to a defined temperature profile in the nuclear fuel, are radiated into the resonance chamber (51) via the individual openings (54).

4. Method according to one of Claims 1 to 3, **characterized in that** the nuclear fuel is held in a tube (59) filled with sintering gas (62) and is warmed by the microwaves to temperatures between 20 and 2200°C, preferably with an average temperature between 1400 and 1800°C.

5. Method according to one of Claims 1 to 4, **characterized in that** the nuclear fuel is introduced on one side of the furnace (1), is transported through the furnace during the sintering and is removed on the other side.

6. Method according to Claim 5, **characterized in that** a sintering gas (62) is passed through the resonance chamber (51) counter to the transporting direction of the nuclear fuel, preferably in a tube (59) made of ceramic surrounding the nuclear fuel.

7. Method according to one of Claims 1 to 6, **characterized in that** an elongate, preferably cuboidal resonance chamber (51) is used and the narrow openings (54) are offset with respect to one another in the longitudinal direction.

8. Method according to one of Claims 1 to 7, **characterized in that** slots (54) are used as the narrow openings.

9. Method according to one of Claims 1 to 8, **characterized in that** the narrow connecting openings (42, 54) are made in parts (41) of a wall (43) of the resonance chamber (51) or antenna cavity (52) which are held movably on other parts of the wall (43), and **in that** a defined temperature profile in the nuclear fuel is set by changing the position of the connecting openings.

10. Method according to one of Claims 1 to 9, **characterized in that** an elongate antenna cavity (53) with a cross section adapted to the frequency of the microwave radiator (56) and a resonance chamber (51) arranged parallel to said cavity, of approximately the same length and with a larger cross section, are used.

11. Method according to one of Claims 1 to 10, **characterized in that** a plurality of layers (86) with the nuclear fuel are arranged in the resonance chamber (51).

12. Method according to Claim 11, **characterized in that** the nuclear fuel (86) is distributed virtually in a symmetrical arrangement about the centre axis of the resonance chamber (51) over the cross section of the resonance chamber (51).

13. Method according to one of Claims 1 to 12, **characterized in that** microwaves are fed by a second microwave radiator (56) into a second antenna cavity (53), which likewise radiates microwaves into the resonance chamber (51) via a plurality of narrow connecting openings.

14. Method according to Claim 13, **characterized in that** at most four antenna cavities feed microwaves into the resonance chamber (51).

15. Method according to one of Claims 1 to 14, **characterized in that** the microwaves are generated at a frequency of between 0.4 and 30 GHz, preferably approximately 915 MHz or 2.45 GHz.

16. Method according to one of Claims 1 to 15, **characterized in that** the nuclear fuel is introduced into the resonance chamber (51) and is removed from the resonance chamber (51) in each case through a metallic tube (61).

17. Method according to one of Claims 1 to 16, **characterized in that** the nuclear fuel is introduced into the resonance chamber (51) through a chamber (77) which is filled with hot sintering gas and is virtually free from microwaves and is removed from the resonance chamber (51) through a chamber (77) which is filled with cold sintering gas and is virtually free from microwaves.

18. Method according to one of Claims 1 to 17, **characterized in that** the nuclear fuel is passed through an insulation (80a, 80b), which provides insulation against emission of heat, arranged within the resonance chamber (51).

19. Microwave furnace with an elongate resonator chamber (51), an elongate hollow channel, running along the outside on a longitudinal side of the resonator chamber (51), and a waveguide (55), which opens into the hollow channel at one end and is closed at the opposite end, where it contains a microwave radiator (56), the hollow channel being separated from the resonator chamber by a separating wall (52) and being connected to the resonator chamber (51) by a plurality of slots (54) in this separating wall which are offset with respect to one another in the longitudinal direction of the resonance chamber, and, furthermore, the resonator chamber (51) being shielded on all sides by walls reflecting microwaves apart from an access for introducing and removing fuel, **characterized in that**, for producing sintered nuclear fuel compacts by sintering moulded green compacts of nuclear fuel in a sintering gas at average temperatures of between 1200 and 1800°C,
- a gassing and degassing system (62) of the resonator chamber is provided, and in the resonator chamber (51) an elongate holder (59) is provided for the green compacts as fuel and
- the elongate hollow channel is closed at one end face by the separating wall bearing slots and forms an antenna cavity (53), which is shielded on all sides by walls reflecting microwaves apart from the opening into the waveguide (55) and the slots (54) in the separating wall (52) and is tuned for the forming of a stationary wave.

20. Furnace according to Claim 19, **characterized in that** at least 95% of one side of the antenna cavity (21) is formed by the separating wall (4) and at most 5% is formed by the connection to the resonance chamber (20).

21. Furnace according to Claim 19, **characterized in that** the waveguide (55) forms, at least at the open end, a rectilinear channel piece with a rectangular cross section matched to the frequency of the microwave radiator.

22. Furnace according to either of Claims 19 and 21, **characterized in that** a diaphragm (57) is arranged in the waveguide (55) between the microwave radiator (56) and the opening into the antenna cavity (53).

23. Furnace according to one of Claims 19 to 22, **characterized in that** the frequency of the microwave radiator (56) is 0.4 to 30 GHz, preferably 915 MHz or 2.45 GHz.

24. Furnace according to one of Claims 19 to 23, **characterized in that** the microwave radiator (56) is a magnetron or klystron.

25. Furnace according to one of Claims 19 to 24, **characterized in that** the output of the microwave radiator (56) is between 1 and 4 kW.

26. Furnace according to one of Claims 19 to 25, **characterized in that** the antenna cavity (53) is cuboidal.

27. Furnace according to Claim 26, **characterized in that** the length of the antenna cavity (21) is variable by means of a terminating plunger (28) with a microwave-reflecting surface.

28. Furnace according to one of Claims 19 to 27, **characterized in that** the resonance chamber (51) is connected via slots (54) to at least one further antenna cavity (53), into which a further waveguide (55) bearing a further microwave radiator (56) opens.

29. Furnace according to one of Claims 19 to 28, **characterized in that** the resonance chamber comprises two subchambers arranged one behind the other, to which there is respectively connected via a plurality of slots at least one antenna cavity fed by a microwave radiator, and **in that** the holder for the fuel extends through both subchambers.

30. Furnace according to one of Claims 19 to 29, **characterized in that** the waveguide (55) and the antenna cavity (53) have the same cross section.

31. Furnace according to one of Claims 19 to 30, **characterized in that** the resonance chamber (51) has a cuboidal cross section which is larger - in particular on its side formed by the separating wall (52) - than the cross section of the antenna cavity (53).

32. Furnace according to one of Claims 19 to 31, **characterized in that** the sides of the cross section of the resonance chamber (51) are at least one quarter and at most 4 times the wavelength of the microwave radiation in air.

33. Furnace according to one of Claims 19 to 32, **characterized in that** a microwave-transparent thermal insulation (80a, 80b) is fitted in the resonance chamber (51) between the nuclear fuel and the walls.

34. Furnace according to one of Claims 19 to 33, **characterized in that** the walls of the resonance chamber and/or antenna cavity are mirrored or polished.

35. Furnace according to one of Claims 19 to 34, **characterized in that** a plurality of holders (87) for in each case one layer (86) of the nuclear fuel are arranged in the resonance chamber (85).

36. Furnace according to Claim 35, **characterized in that** the nuclear fuel (86) is arranged in the layers approximately symmetrically about the longitudinal axis of the resonance chamber (85).

37. Furnace according to one of Claims 19 to 36, **characterized in that** the holder comprises a tube (88, 59) made of ceramic which is arranged approximately in the centre of the resonance chamber (85), surrounds the fuel and extends through the entire resonance chamber (51).

38. Furnace according to Claim 37, **characterized in that** the gassing and degassing system (62) opens into the interior of the tube (59).

39. Furnace according to one of Claims 19 to 38, **characterized in that** the gassing and degassing system comprises at least one gas lock (77), which at the same time forms the access to the resonance chamber (51).

40. Furnace according to one of Claims 19 to 39, **characterized in that** the access for introduction and removal comprises a metallic tube (60, 61), which is arranged outside the resonance chamber (51) and through which the fuel is transported.

41. Furnace according to one of Claims 19 to 40, **characterized in that** at least one slot (42, 45) in the wall is movable, preferably by turning a disc (44) movably mounted in the wall or displacing a slide (41) movably mounted in the wall.

42. Furnace according to one of Claims 19 to 41, **characterized in that** the slots (92, 94) are offset with respect to one another in the longitudinal direction of the resonance chamber (51).

43. Furnace according to Claim 42, **characterized in that** the slots (92) in a separating wall of an antenna cavity are all arranged on one side, with respect to the longitudinal direction of the separating wall.

44. Furnace according to one of Claims 19 to 43, **characterized in that** at most 5% of the side of the antenna cavity (53) formed by the separating wall is formed by the slots.

45. Furnace according to one of Claims 19 to 44, **characterized in that** the width of the slot is at most 8% of the wavelength of the microwaves in air.

46. Furnace according to one of Claims 19 to 45, **characterized in that**, on walls of the resonance chamber (51) opposite each other, two antenna cavities are connected to the resonance chamber (51) via slots and are separated by a respective separating wall and **in that** the slots are arranged in regions of the two separating walls which are not opposite each other.

47. Furnace according to one of Claims 19 to 46, **characterized by** walls made of steel or some other material which is heat-resistant up to 800°C and is chemically resistant.

## Revendications

1. Procédé de traitement de combustible nucléaire dans un four (1) à micro-ondes,
**caractérisé en ce que** l'on maintient une onde stationnaire dans une cavité (3) d'antenne au moyen d'un émetteur de micro-ondes et on introduit le combustible nucléaire dans un chambre (51) de résonateur, qui est alimentée en micro-ondes à partir de la cavité (53) d'antenne par une multiplicité d'étroites ouvertures (54) de liaison.

2. Procédé suivant la revendication 1,
**caractérisé en ce que** l'on alimente l'émetteur de micro-ondes maintenant l'onde stationnaire par l'intermédiaire d'un guide d'ondes dans la cavité formant antenne.

3. Procédé suivant la revendication 1 ou 2,
**caractérisé en ce que** l'on injecte dans la chambre (51) de résonateur par les diverses ouvertures (54) des puissances différentes adaptées à un profil de températures défini du combustible nucléaire.

4. Procédé suivant l'une des revendications 1 à 3,
**caractérisé en ce que** l'on maintient le combustible nucléaire dans un tube (59) empli de gaz (62) de frittage et on le porte par les micro-ondes à des températures comprises entre 20 et 2200°C et, de préférence, à une température moyenne comprise entre 1400 et 1800°C.

5. Procédé suivant l'une des revendications 1 à 4,
**caractérisé en ce que** l'on introduit le combustible nucléaire d'un côté du four (1), on le transporte dans le four pendant le frittage et on le retire de l'autre côté.

6. Procédé suivant la revendication 5,
dans lequel on envoie dans la chambre (51) de résonateur un gaz (62) de frittage en sens inverse du sens de transport du combustible nucléaire, de préférence dans un tube (59) en céramique entourant le combustible nucléaire.

7. Procédé suivant l'une des revendications 1 à 6,
**caractérisé en ce que** l'on utilise une chambre (51) de résonateur oblongue, de préférence parallélépipédique, et on décale les ouvertures (54) étroites les unes par rapport aux autres dans la direction longitudinale.

8. Procédé suivant l'une des revendications 1 à 7,
**caractérisé en ce que** l'on utilise comme ouvertures étroites des fentes (54).

9. Procédé suivant l'une des revendications 1 à 8,
**caractérisé en ce que** l'on usine les ouvertures (42, 54) étroites de liaison dans des parties (41) d'une paroi (43) de la chambre (51) de résonateur ou de la Cavité (52) formant antenne, qui sont maintenues mobiles sur d'autres parties de la paroi (43) et **en ce que**, en modifiant la position des ouvertures de liaison, on établit un profil de température défini dans le combustible nucléaire.

10. Procédé suivant l'une des revendications 1 à 9,
**caractérisé en ce que** l'on utilise une cavité (53) formant antenne oblongue ayant une section transversale adaptée à la fréquence de l'émetteur (56) de micro-ondes et une chambre (51) de résonateur, montée en parallèle à celle-ci, à peu près de même longueur et ayant une section transversale plus grande.

11. Procédé suivant l'une des revendications 1 à 10,
**caractérisé en ce que** l'on dispose dans la chambre (51) de résonateur plusieurs couches (86) de combustible nucléaire.

12. Procédé suivant la revendication 11,
**caractérisé en ce que** l'on répartit le combustible (86) nucléaire pratiquement suivant une disposition symétrique par rapport à l'axe médian de la chambre (51) de résonateur tout autour de la section transversale de la chambre (51) de résonateur.

13. Procédé suivant l'une des revendications 1 à 12,
**caractérisé en ce que** l'on envoie par un deuxième émetteur (56) de micro-ondes des micro-ondes dans une deuxième cavité (53) formant antenne, qui émet par une multiplicité d'étroites ouvertures de liaison également des micro-ondes dans la chambre (51) de résonateur.

14. Procédé suivant la revendication 13,
**caractérisé en ce que** l'on alimente la chambre (51) de résonateur en micro-ondes par au plus quatre cavités formant antenne.

15. Procédé suivant l'une des revendications 1 à 14,
**caractérisé en ce que** l'on produit les micro-ondes à une fréquence comprise entre 0,4 et 30 GHz, de préférence à environ 915 MHz ou 2,45 GHz.

16. Procédé suivant l'une des revendications 1 à 15,
**caractérisé en ce que** l'on introduit le combustible nucléaire dans la chambre (51) de résonateur et on l'en sort en passant dans un tube (61) métallique, respectivement.

17. Procédé suivant l'une des revendications 1 à 16,
**caractérisé en ce que** l'on introduit le combustible nucléaire dans la chambre (51) de résonateur en passant par une chambre (77) emplie du gaz chaud de frittage et pratiquement exempte de micro-ondes et on l'en retire de la chambre (77) emplie de gaz de frittage froid.

18. Procédé suivant l'une des revendications 1 à 17,
**caractérisé en ce que** l'on guide le combustible nucléaire dans une isolation (80a, 80b) disposée à l'intérieur de la chambre (51) de résonateur et isolée du point de vue du rayonnement de la chaleur.

19. Four à micro-ondes ayant une chambre (51) de résonateur oblongue, un canal creux oblong s'étendant à l'extérieur le long d'une face longitudinale de la chambre (51) de résonateur et un guide d'ondes (55), qui débouche à une extrémité dans le canal creux et qui est fermé à l'extrémité opposée et qui comporte un émetteur (56) de micro-ondes, le canal creux étant séparé de la chambre de résonateur par une cloison (52) et communiquant avec la chambre (51) de résonateur par une multiplicité de fentes (54) ménagées dans cette cloison en étant mutuellement décalées dans la direction longitudinale de la chambre de résonateur, et dans lequel, en outre, la chambre (51) de résonateur est protégée, à l'exception d'un accès pour introduire et retirer du produit, de tous côtés par des parois réfléchissant les micro-ondes, **caractérisé en ce que** pour fabriquer des corps frittés en combustible nucléaire par frittage d'ébauches mises en forme par compression en combustible nucléaire dans un gaz de frittage à des températures moyennes comprises entre 1200 et 1800°C
- il est prévu un système (62) d'envoi de gaz dans la chambre de résonateur et de dégazage de celle-ci et dans la chambre (51) de résonateur une fixation (59) oblongue des ébauches servant de matériau et
- le canal creux oblong est fermé sur une surface frontale par la cloison portant les fentes et forme une cavité (53) d'antenne, qui est protégée de tous côtés par des parois réfléchissant les micro-ondes, à l'exception de l'embouchure du guide d'ondes (55) et des fentes (54) ménagées dans la cloison (52), et qui est adaptée à la formation d'une onde stationnaire.

20. Four suivant la revendication 19,
**caractérisé en ce qu'**au moins 95 % sont formés par la face, formée par la cloison (4), de la cavité (21) d'antenne et au plus 5 % par la liaison vers la chambre (20) de résonateur.

21. Four suivant la revendication 19,
**caractérisé en ce que** le guide d'ondes (55) forme au moins à l'extrémité ouverte un tronçon de canal linéaire ayant une section transversale rectangulaire adaptée à la fréquence de l'émetteur de micro-ondes.

22. Four suivant l'une des revendications 19 et 21,
**caractérisé en ce qu'**il est disposé dans le guide d'ondes (55) un écran (57) entre l'émetteur (56) de micro-ondes et l'embouchure dans la cavité (53) d'antenne.

23. Four suivant l'une des revendications 19 à 22,
**caractérisé en ce que** la fréquence de l'émetteur (56) de micro-ondes est comprise entre 0,4 et 30 GHz et est, de préférence, de 915 MHz ou de 2,45 GHz.

24. Four suivant l'une des revendications 19 à 23,
**caractérisé en ce que** l'émetteur (56) de micro-ondes est un magnétron ou un klystron.

25. Four suivant l'une des revendications 19 à 24,
**caractérisé en ce que** la puissance de l'émetteur (56) de micro-ondes est comprise entre 1 et 4 kW.

26. Four suivant l'une des revendications 19 à 25,
**caractérisé en ce que** la cavité (53) d'antenne est parallélépipédique.

27. Four suivant la revendication 26,
**caractérisé en ce que** la longueur de la cavité (21) d'antenne peut être modifiée par un tiroir (28) de fermeture ayant une surface réfléchissant les micro-ondes.

28. Four suivant l'une des revendications 19 à 27,
**caractérisé en ce que** la chambre (51) de résonateur communique par les fentes (54) avec au moins une autre cavité (53) d'antenne dans laquelle débouche un autre guide d'ondes (55) portant un autre émetteur (56) micro-ondes.

29. Four suivant l'une des revendications 19 à 28,
**caractérisé en ce que** la chambre de résonateur est constituée de deux sous-chambres disposées l'une derrière l'autre et avec lesquelles communiquent, respectivement, par une multiplicité de fentes, au moins une cavité d'antenne alimentée en rayonnement micro-ondes et la fixation du combustible s'étend dans les deux sous-chambres.

30. Four suivant l'une des revendications 19 à 29,
**caractérisé en ce que** le guide d'ondes (55) et la cavité (53) d'antenne ont la même section transversale.

31. Four suivant l'une des revendications 19 à 30,
**caractérisé en ce que** la chambre (51) de résonateur a une section transversale en forme de quadrilatère qui, notamment sur son côté formé par la cloison (52), est plus grande que la section transversale de la cavité (53) d'antenne.

32. Four suivant l'une des revendications 19 à 31,
**caractérisé en ce que** les côtés de la section transversale de la chambre (51) de résonateur représentent au moins un quart et au plus quatre fois la longueur d'onde du rayonnement micro-ondes dans l'air.

33. Four suivant l'une des revendications 19 à 32,
**caractérisé en ce qu'**il est prévu dans la chambre (51) de résonateur, entre le combustible nucléaire et les parois, une isolation (80a, 80b) calorifique transparente aux micro-ondes.

34. Four suivant l'une des revendications 19 à 33,
**caractérisé en ce que** les parois de la chambre de résonateur et/ou de la cavité d'antenne sont rendues réfléchissantes ou sont polies.

35. Four suivant l'une des revendications 19 à 34,
**caractérisé en ce qu'**il est prévu dans la chambre (85) de résonateur plusieurs fixations (87) pour respectivement une couche (86) du combustible nucléaire.

36. Four suivant la revendication 35,
**caractérisé en ce que** le combustible (86) nucléaire est disposé dans les couches à peu près symétriquement par rapport à l'axe longitudinal de la chambre (87) de résonateur.

37. Four suivant l'une des revendications 19 à 36,
**caractérisé en ce que** la fixation comprend un tube (88, 59) en céramique disposé à peu près au milieu de la chambre (85) de résonateur, entourant le combustible et s'étendant dans toute la chambre (51) de résonateur.

38. Four suivant la revendication 37,
**caractérisé en ce que** le système (62) d'envoi de gaz et de dégazage débouche à l'intérieur du tube (59).

39. Four suivant l'une des revendications 19 à 38,
**caractérisé en ce que** le système d'envoi de gaz et de dégazage comprend au moins un sas (77) à gaz qui forme en même temps l'accès à la chambre (51) de résonateur.

40. Four suivant l'une des revendications 19 à 39,
**caractérisé en ce que** l'accès pour l'introduction et le retrait comprend un tube (60, 61) métallique qui est disposé à l'extérieur de la chambre (51) de résonateur et dans lequel le combustible est transporté.

41. Four suivant l'une des revendications 19 à 40,
**caractérisé en ce qu'**au moins l'une des fentes (42, 45) de la paroi est mobile, de préférence par rotation d'un disque (44) monté mobile dans la paroi ou par coulissement d'un tiroir (41) monté mobile dans la paroi.

42. Four suivant l'une des revendications 19 à 41,
**caractérisé en ce que** les fentes (92, 94) sont décalées les unes par rapport aux autres dans la direction longitudinale de la chambre (51) de résonateur.

43. Four suivant la revendication 42,
**caractérisé en ce que** les fentes sont disposées dans une cloison d'une cavité d'antenne toutes d'un côté, rapporté à la direction longitudinale de la cloison.

44. Four suivant l'une des revendications 19 à 43,
**caractérisé en ce qu'**il est formé au plus 5 % de la face, formée par la cloison, de la cavité (53) d'antenne est formée par les fentes.

45. Four suivant l'une des revendications 19 à 44,
**caractérisé en ce que** la largeur de la fente représente au plus 8 % de la longueur d'onde des micro-ondes dans l'air.

46. Four suivant l'une des revendications 19 à 45,
**caractérisé en ce que** sur des parois mutuellement opposées de la chambre (51) de résonateur, deux cavités d'antenne communiquent avec la chambre (51) de résonateur par des fentes et sont séparées respectivement par une cloison et **en ce que** le fentes sont disposées dans des parties qui ne sont pas opposées l'une à l'autre des deux cloisons.

47. Four suivant l'une des revendications 19 à 46,
**caractérisé par** des cloisons en acier ou en un autre matériau qui résistent à la chaleur jusqu'à 800°C et qui résistent chimiquement.
